# EUROPEAN PATENT APPLICATION

(11) **EP 4 835 336 A1**
(43) Date of publication of application: **04.11.2026**
(21) Application number: 24911609.6
(22) Date of filing: 30.12.2024
(51) Int. Cl.: F16K 27/00, B60H 1/00

(54) **INTEGRATED DEVICE**

(30) Priority: 28.12.2023 CN 202323629523 U; 03.04.2024 CN 202420687393 U
(71) Applicant: Shaoxing Sanhua Automotive Thermal Management Technology Co., Ltd., Shaoxing, Zhejiang 312000 (CN)
(72) Inventor: LIANG, Jiahe, Shaoxing, Zhejiang 312000 (CN); ZHOU, Wei, Shaoxing, Zhejiang 312000 (CN); YIN, Zhengyi, Shaoxing, Zhejiang 312000 (CN); WANG, Tao, Shaoxing, Zhejiang 312000 (CN); TAO, Xia, Shaoxing, Zhejiang 312000 (CN)
(74) Representative: Maikowski & Ninnemann Patentanwälte Partnerschaft mbB
(86) International application number: PCT/CN2024/143672
(87) International publication number: WO 2025/140695

(57) **Abstract**

Provided in one embodiment of the present application is an integrated device. The integrated device has a liquid storage cavity, and comprises a first flow channel and a second flow channel. In a first direction, the first flow channel is located on the side of a housing away from a cover. In the first direction, at least part of a wall forming the second flow channel overlaps a wall forming the liquid storage cavity, that is to say, at least part of the second flow channel is located on the peripheral side of the liquid storage cavity. Such arrangements make full use of the space on the peripheral side of the liquid storage cavity to arrange the flow channels, thereby facilitating the compact design of the integrated device.

## Description

The present application claims priorities to following two Chinese Patent Applications, which are incorporated herein by reference in their entireties:
1. Chinese Patent Application No. 202323629523.6, titled "CONNECTOR AND INTEGRATED DEVICE", filed with the China National Intellectual Property Administration on December 28, 2023; and
2. Chinese Patent Application No. 202420687393.7, titled "INTEGRATED DEVICE", filed with the China National Intellectual Property Administration on April 3, 2024.

### FIELD

The present application relates to the technical field of thermal management, and in particular to an integrated device for a vehicle.

### BACKGROUND

A thermal management system includes multiple functional components, which may be integrated onto a single housing. Communication among these components is achieved through passages inside the housing. When the passages are arranged on the same side of the housing, due to complex communication among the passages, it is necessary to use multiple layers of plates joined together in pairs to form the passages, resulting in the housing having a complex structure and occupying a relatively large amount of space.

### SUMMARY

An integrated device with a compact structure is provided according to the present application.

In order to achieve the above object, following technical solutions are provided according to an embodiment of the present application.

An integrated device includes a housing, a cover, and an adapter plate. The integrated device has a liquid storage cavity, which is defined by a wall of the housing and a wall of the cover. The integrated device has a flow passage, which includes a first flow passage and a second flow passage. A first direction is defined as a direction in which the housing is connected with the cover. Along the first direction, the first flow passage is located on a side of the housing away from the cover. Along the first direction, at least part of walls defining the second flow passage overlap with the walls defining the liquid storage cavity.

An integrated device is provided according to an embodiment of the present application. The integrated device has a liquid storage cavity, and includes a first flow passage and a second flow passage. Along the first direction, the first flow passage is located on the side of a housing away from a cover. Along the first direction, at least part of walls defining the second flow passage overlap with walls defining the liquid storage cavity. That is, at least part of the second flow passage is located on a peripheral side of the liquid storage cavity. This arrangement makes full use of the space on the peripheral side of the liquid storage cavity to arrange the flow passages, thereby facilitating a compact design of the integrated device.

### BRIEF DESCRIPTION OF THE DRAWINGS

FIG. 1 is a schematic perspective view of an integrated device according to an embodiment of the present application;
FIG. 2 is another schematic structural view of the integrated device in FIG. 1;
FIG. 3 is a schematic structural view of a connection structure of a housing and a cover in FIG. 1;
FIG. 4 is another schematic structural view of the housing and the cover in FIG. 3;
FIG. 5 is yet another schematic structural view of the housing and the cover in FIG. 3;
FIG. 6 is a cross-sectional view taken along line A-A in FIG. 5;
FIG. 7 is a cross-sectional view taken along line B-B in FIG. 5;
FIG. 8 is a cross-sectional view taken along line D-D in FIG. 5;
FIG. 9 is a schematic view of a reverse filling structure of a first flow passage and a second flow passage of the integrated device in FIG. 1;
FIG. 10 is a partially exploded schematic view of a mounting site of a first multi-port valve in the integrated device in FIG. 1;
FIG. 11 is an exploded schematic view of the housing and a first adapter plate of the integrated device in FIG. 10;
FIG. 12 is a partially exploded schematic view of a mounting site of a second multi-port valve in the integrated device in FIG. 1;
FIG. 13 is an exploded schematic view of the housing and a second adapter plate of the integrated device in FIG. 12;
FIG. 14 is another schematic view of the housing and the second adapter plate of the integrated device in FIG. 13; and
FIG. 15 is a partially exploded schematic view of a mounting site of a pump in the integrated device in FIG. 1.

Reference numerals in the figures are as follows:
100. integrated device; 51. housing; 52. cover; 53. liquid storage cavity; 54. sealing cap;
10. flow passage; 13. first flow passage; 11. first sub-flow passage; 12. second sub-flow passage; 130. third sub-flow passage; 131. first connection port; 132. second connection port; 134. fourth sub-flow passage; 135. fifth sub-flow passage; 14 second flow passage; 600. first side flow passage; 700. second side flow passage;
20 fluid connector; 21 first fluid connector; 22 second fluid connector; 231 first pump fluid connector; 232. second pump fluid connector; 233. third pump fluid connector; 24. third fluid connector; 25. fourth fluid connector; 26. fifth fluid connector; 27. sixth fluid connector; 28. seventh fluid connector;
30. first multi-port valve; 31. first valve port; 32. second valve port; 33. fifth valve port; 40. second multi-port valve; 41. third valve port; 42. fourth valve port; 80. pump; 81. first pump; 82. second pump; 83. third pump; 18. pump mounting base; 181. first pump mounting base; 182. second pump mounting base; 183. third pump mounting base;
60. first adapter plate; 70. second adapter plate; 61. first branch flow passage; 62. second branch flow passage; 63. fifth branch flow passage; 71. third branch flow passage; 72. fourth branch flow passage; 76. sixth branch flow passage; 77. seventh branch flow passage; 78. eighth branch flow passage; 79. ninth branch flow passage; 73. tenth branch flow passage; 74. eleventh branch flow passage; 75. twelfth branch flow passage;
730. first protrusion; 731. first unit protrusion; 732. second unit protrusion; 740. first groove; 15. second protrusion; 151. third unit protrusion; 152. fourth unit protrusion; 16. second groove.

### DETAILED DESCRIPTION OF THE EMBODIMENTS

Hereinafter technical solutions in embodiments of the present application will be described clearly and completely with reference to the drawings relating to embodiments of the present application. Apparently, the embodiments described are only some rather than all of the embodiments of the present application. Based on the embodiments of the present application, all other embodiments obtained by those skilled in the art without any creative work fall into the protection scope of the present application.

The integrated device according to the present application is applied to thermal management systems, particularly vehicle thermal management systems, and may also be applied to commercial, residential, energy storage, and other thermal management systems.

A first embodiment is described as follows.

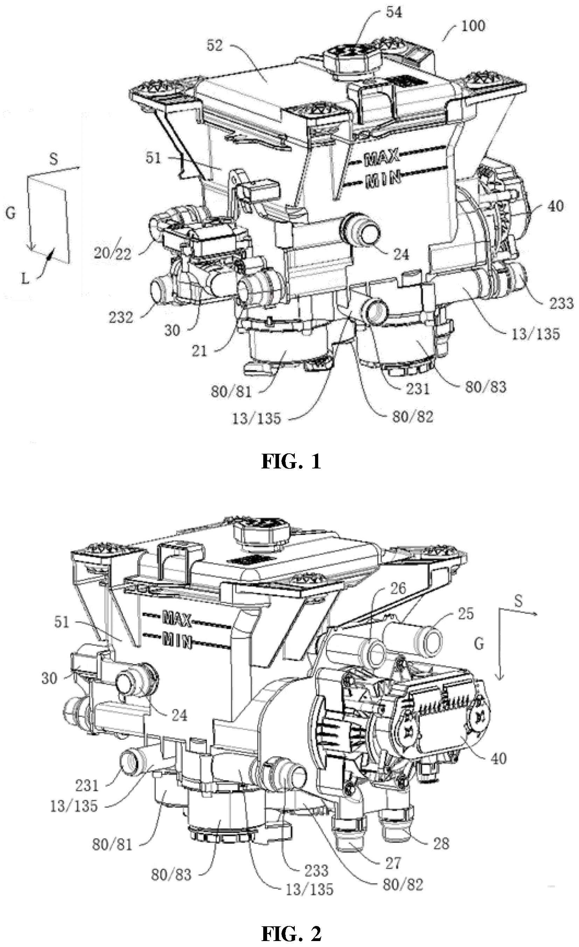

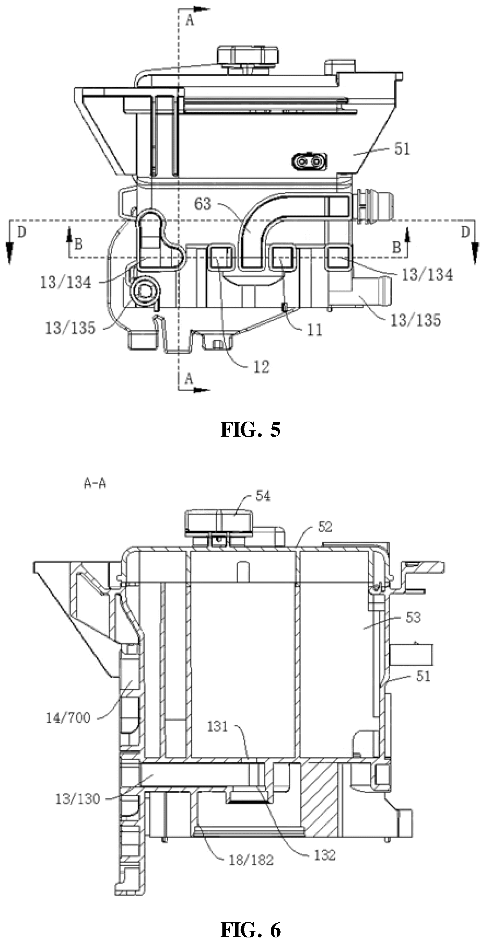

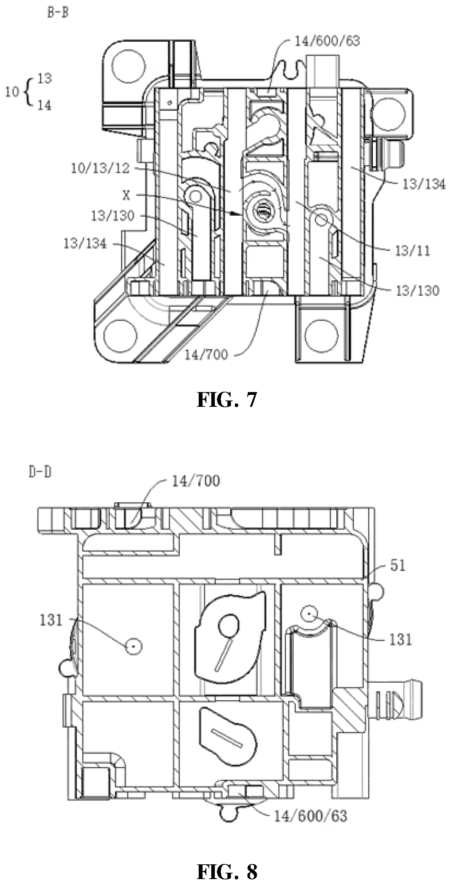

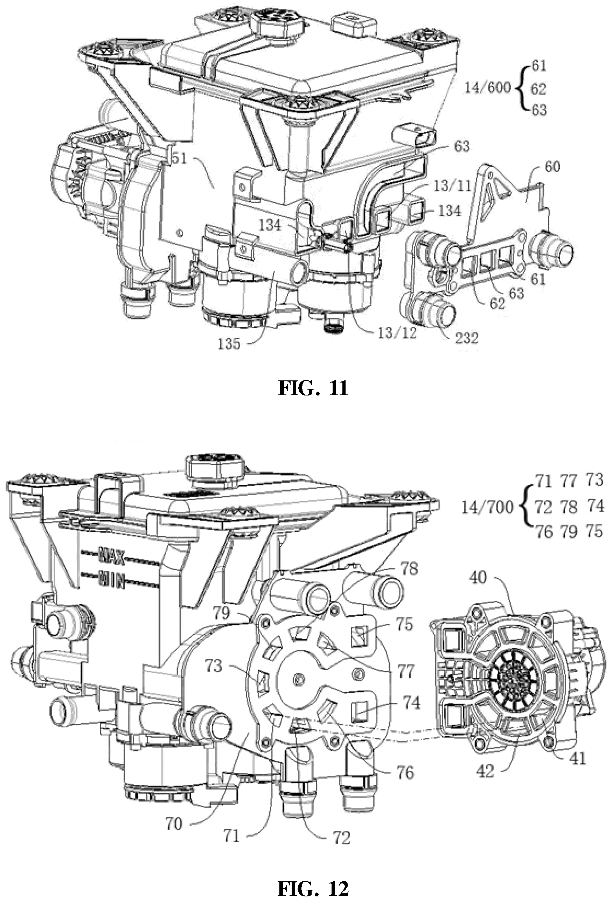

As shown in FIGS. 1 to 15, an integrated device 100 is provided according to an embodiment of the present application, which includes a housing 51, a cover 52, and a sealing cap 54. The housing 51 is in fixed or position-limited connection with the cover 52, for example, through welding, adhesive bonding, or snap-fit connections. In this embodiment, the housing 51 is connected to the cover 52 through welding. The housing 51 is generally a cuboid thin-walled structure with an opening at its top, which may be sealed by the cover 52. The integrated device 100 has a liquid storage cavity 53, which is defined by a wall of the housing 51 and a wall of the cover 52. A coolant filling port is provided on a side of the cover 52 away from the housing 51, and the sealing cap 54 is detachably connected to the cover 52, for example, via a threaded connection. The sealing cap 54 seals the coolant filling port. Medium, which may be coolant, can be filled into the liquid storage cavity 53 through the coolant filling port on the cover 52.

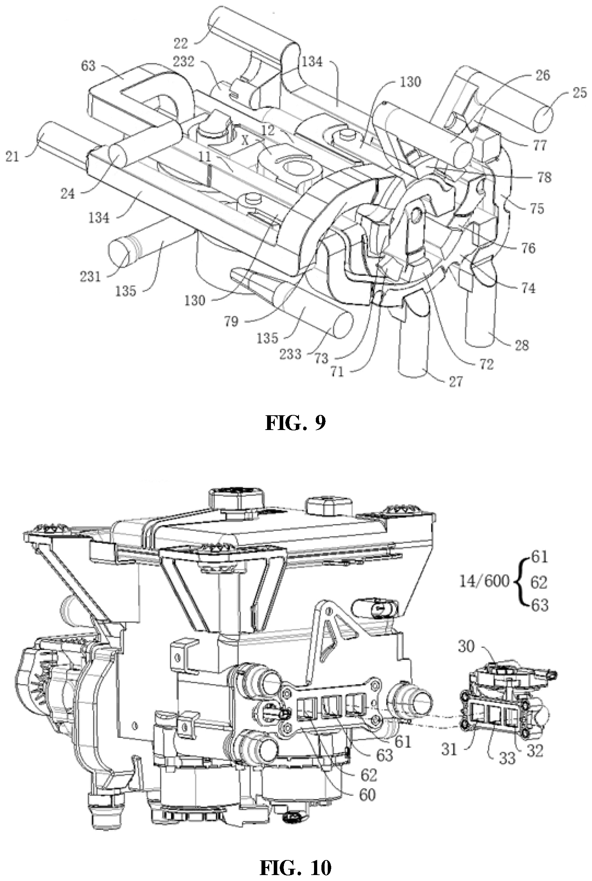

As shown in FIGS. 10 to 15, the integrated device 100 includes a multi-port valve and an adapter plate. Specifically, the multi-port valve includes a first multi-port valve 30 and a second multi-port valve 40, and the adapter plate includes a first adapter plate 60 and a second adapter plate 70. The adapter plate is arranged separately from the housing 51 and is in fixed or position-limited connection with the housing 51. In this embodiment, the adapter plate is connected to the housing 51 through welding. The first multi-port valve 30 is in fixed or position-limited connection with the housing 51 via the first adapter plate 60, and the second multi-port valve 40 is in fixed or position-limited connection with the housing 51 via the second adapter plate 70. Specifically, the first multi-port valve 30 is bolted to the first adapter plate 60, and the second multi-port valve 40 is bolted to the second adapter plate 70. In a specific embodiment, the first multi-port valve 30 may be a three-port valve with a first valve port 31, a second valve port 32, and a fifth valve port 33, and the second multi-port valve 40 may be a nine-port valve with a third valve port 41, a fourth valve port 42, and seven other valve ports. In other embodiments, at least one multi-port valve of the integrated device 100 may be directly bolted to the housing 51, and the integrated device 100 may include only one adapter plate.

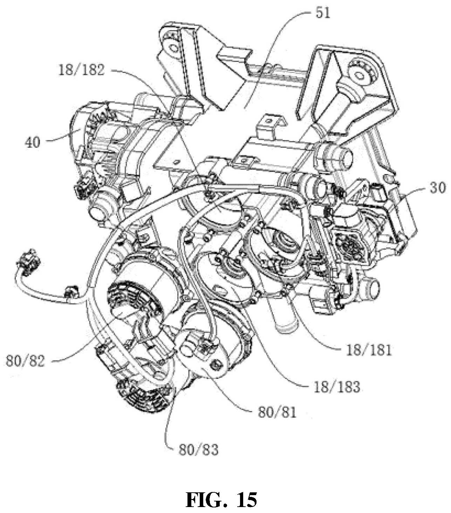

As shown in FIG. 15, the housing 51 includes a pump mounting base 18, and the integrated device 100 includes a pump 80. In this embodiment, there are three pump mounting bases 18, and correspondingly, there are three pumps 80. At least part of the pump 80 is located in a chamber of the pump mounting base 18, and the pump is in fixed or position-limited connection with the corresponding pump mounting base 18. The pump 80 can provide power to the fluid flowing through a passage in the pump 80. A first pump 81 corresponds to a first pump mounting base 181, a second pump 82 corresponds to a second pump mounting base 182, and a third pump 83 corresponds to a third pump mounting base 183.

As shown in FIGS. 1 to 15, the integrated device 100 has flow passages 10 and includes a fluid connector 20 for connecting to other components of the thermal management system, such as a power battery, a motor assembly, an electric heater, a heater core, a radiator, a battery cooler, or the like. In this embodiment, the integrated device 100 is provided with ten fluid connectors 20. At least part of the flow passage 10 is in communication with an opening of the fluid connector 20, allowing the medium within the integrated device 100 to flow through the flow passage 10 and the opening of the fluid connector 20 to other components of the thermal management system, thereby enabling the integrated device 100 to form coolant circuits with the other components of the thermal management system to achieve cooling or heating of the thermal management system. Additionally, the chamber of the pump mounting base 18 is in communication with valve ports of the multi-port valve through at least part of the flow passage 10, enabling the integrated device 100 to pump the medium flowing out of the valve ports of the multi-port valve outward or to pump the medium to the valve ports of the multi-port valve. The valve ports of the first multi-port valve 30 are in communication with the valve ports of the second multi-port valve 40 through at least part of the flow passage 10, enabling the integrated device 100 to switch the coolant circuits by switching the valve ports of the multi-port valve.

In this embodiment, the flow passage 10 includes a first flow passage 13. The housing 51 is integrally injection-molded, and the first flow passage 13 is located in the housing 51, or in other words, the housing 51 has the first flow passage 13. Specifically, the first flow passage 13 is defined by the wall of the housing 51. As shown in FIG. 1, a first direction G is defined as a direction in which the housing 51 is connected with the cover 52. Along the first direction G, the housing 51 and the cover 52 are brought close to each other and connected together by welding. In other embodiments, the housing 51 and the cover 52 may also be brought close to each other and connected together by threading, with a direction of the threading being circumferential around the first direction G. As shown in FIGS. 1 to 4, the first flow passage 13 is located on a side of the housing 51 away from the cover 52, with at least part of the first flow passage 13 extending along a bottom surface of the housing 51. Along the first direction G, the first flow passage 13 includes two layers of flow passages at different heights. The first layer includes multiple parallel flow passages, and the second layer includes three branch flow passages. The second layer of flow passages is located on the side of the housing 51 away from the cover 52 compared with the first layer of flow passages. Similarly, the pump mounting base 18 is located on the side of the housing 51 away from the cover 52 compared with a first sub-flow passage 11. The chamber of the pump mounting base 18 is in communication with at least part of the parallel flow passages at one side, and is in communication with the branch flow passages at the other side. The double-layer arrangement of the first flow passage 13 facilitates the mounting of the pump 80 with a bottom inlet and side outlet configuration. In this embodiment, the branch flow passages are all in communication with an outlet of the pump 80 and directly in communication with the opening of the fluid connector 20 of the integrated device 100. The combined arrangement of parallel flow passages and branch flow passages results in a simple structure for the first flow passage 13, allowing the first flow passage 13 to be formed through integral injection molding of the housing 51.

Specifically, the first layer of flow passages includes a first sub-flow passage 11 and a second sub-flow passage 12, both of which are straight passages. At least part of the first sub-flow passage 11 and at least part of the second sub-flow passage 12 are arranged parallel to each other. A second direction S is defined as perpendicular to the first direction G, and the first sub-flow passage 11 extends along the second direction S. In this embodiment, along the second direction S, at least part of the first multi-port valve 30 is located on one side of the housing 51, and at least part of the second multi-port valve 40 is located on the opposite side of the housing 51. In other embodiments, the second direction S may be set at an angle ranging from 0 to 90 degrees relative to the first direction G, and mounting directions of the first multi-port valve 30 and the second multi-port valve 40 relative to the housing 51 may also be set at an angle relative to each other, for example, 120 degrees. Specific connection angles of the first multi-port valve 30 and the second multi-port valve 40 relative to the housing 51 may be adaptively adjusted based on an external structure of the integrated device 100.

As shown in FIGS. 10 to 14, one end of the first sub-flow passage 11 is in communication with the first valve port 31 of the first multi-port valve 30, and the other end of the first sub-flow passage 11 is in communication with the third valve port 41 of the second multi-port valve 40. One end of the second sub-flow passage 12 is in communication with the second valve port 32 of the first multi-port valve 30, and the other end of the second sub-flow passage 12 is in communication with the fourth valve port 42 of the second multi-port valve 40. In this embodiment, specifically, as shown in FIGS. 10 to 14, the first valve port 31 of the first multi-port valve 30 is in communication with a first branch flow passage 61, and the third valve port 41 of the second multi-port valve 40 is in communication with a third branch flow passage 71. The first branch flow passage 61 is in communication with one end of the first sub-flow passage 11, and the third branch flow passage 71 is in communication with the other end of the first sub-flow passage 11. Similarly, the second valve port 32 of the first multi-port valve 30 is in communication with the fourth valve port 42 of the second multi-port valve 40 through part of a second flow passage 14 and part of the first flow passage 13. The first sub-flow passage 11 and the second sub-flow passage 12 are both straight passages, and are arranged parallel to each other, minimizing the flow passage path connecting the multi-port valves and facilitating the compact arrangement of the integrated device 100. The first sub-flow passage 11 is adjacent to the second sub-flow passage 12, facilitating the arrangement of a communication component X between the first sub-flow passage 11 and the second sub-flow passage 12. In this embodiment, at least part of the first sub-flow passage 11 is located on one side of the communication component X, and at least part of the second sub-flow passage 12 is located on the opposite side of the communication component X. The communication component X is configured for unidirectional communication between the second sub-flow passage 12 and the first sub-flow passage 11. The communication component X is integrally injection-molded with the housing 51, resulting in a simple structure. In addition, the second sub-flow passage 12 is in communication with the chamber of the first pump mounting base 181 corresponding to the first pump 81.

The first layer of flow passages further includes a third sub-flow passage 130. At least part of the third sub-flow passage 130 is a straight passage, and at least part of the third sub-flow passage 130 is arranged substantially parallel to part of the first sub-flow passage 11. The third sub-flow passage 130 has a first connection port 131 and a second connection port 132. The third sub-flow passage 130 is in communication with the liquid storage cavity 53 through the first connection port 131 and is in communication with the chamber of the second pump mounting base 182 through the second connection port 132. The medium may enter the liquid storage cavity 53 from the third sub-flow passage 130, and the medium may also enter the third sub-flow passage 130 from the liquid storage cavity 53. The first connection port 131 and the second connection port 132 are arranged at least partially opposite to each other, which is more conducive to the integrated device 100 replenishing the circuit including the second pump 82. The housing 51 is also provided with another third sub-flow passage 130 corresponding to the third pump 83, with a similar structure that will not be described in detail here.

The first layer of the flow passages further includes a fourth sub-flow passage 134. At least part of the fourth sub-flow passage 134 is a straight passage, and the fourth sub-flow passage 134 is arranged substantially parallel to the first sub-flow passage 11. Specifically, there are two fourth sub-flow passages 134, which are respectively arranged on the outermost sides of the parallel flow passages of the first layer. The fluid connector 20 includes a first fluid connector 21 and a second fluid connector 22. The first fluid connector 21, the second fluid connector 22, and the first multi-port valve 30 are located on the same side of the integrated device 100. Along the second direction S, one end of the fourth sub-flow passage 134 is in communication with the corresponding valve port of the second multi-port valve 40, and the other end extends to the side where the first multi-port valve 30 is mounted. Specifically, one end of one of the fourth sub-flow passages 134 is in communication with a ninth branch flow passage 79, and the other end is in communication with an opening of the first fluid connector 21. One end of the other of the fourth sub-flow passages 134 is in communication with a sixth branch flow passage 76, and the other end is in communication with an opening of the second fluid connector 22. The fourth sub-flow passage 134 may guide the medium flowing through the valve port of the second multi-port valve 40 to other positions, facilitating connection with other components in the thermal management system.

The second layer of the flow passages includes a fifth sub-flow passage 135. As shown in FIGS. 1 to 15, the fifth sub-flow passage 135 is in communication with the chamber of the pump mounting base 18 corresponding to the pump 80. In this embodiment, there are three fifth sub-flow passages 135, and the corresponding fluid connector 20 includes a first pump fluid connector 231, a second pump fluid connector 232, and a third pump fluid connector 233. The openings of the first pump fluid connector 231, the second pump fluid connector 232, and the third pump fluid connector 233 all face in a direction perpendicular to the first direction G and face different directions.

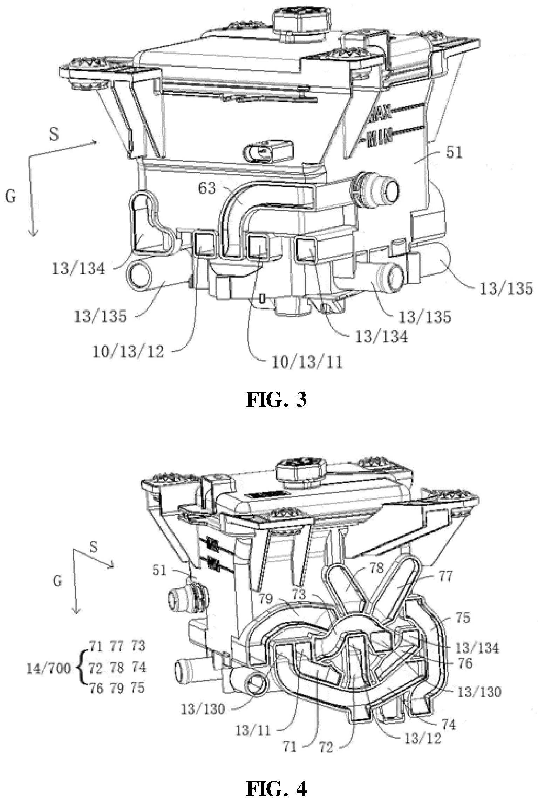

As shown in FIGS. 3 to 5 and 10 to 14, the flow passage 10 of the integrated device 100 includes the second flow passage 14 for communication between the valve ports of the multi-port valves and other flow passages or the fluid connector 20. At least part of the second flow passage 14 is defined by the wall of the housing 51 and a wall of the adapter plate. A first plane L is defined to be an extension plane of the substantially plate-shaped adapter plate. The first plane L is perpendicular to the second direction S, or in other words, parallel to the first direction G. At least part of the walls defining the second flow passage 14 overlap with the walls defining the liquid storage cavity 53 in their projections onto the first plane L. In other words, along the first direction G, at least part of the walls defining the second flow passage 14 overlap with the walls defining the liquid storage cavity 53, that is, part of the wall of the housing 51 defines at least part of the second flow passage 14 on one side in a thickness direction, and defines at least part of the liquid storage cavity 53 on the other side. That is, at least part of the second flow passage 14 is located at a peripheral side of the liquid storage cavity 53. This arrangement make full use of the space on the peripheral side of the liquid storage cavity 53, facilitating the simplification of arrangement of the flow passage 10 of the integrated device 100 as well as the compact design of the integrated device. The flow passage of the integrated device 100 includes the second flow passage 14 and the first flow passage 13. The arrangement of the flow passage 10 of the integrated device 100 enriches the functions of the integrated device 100 and facilitates the mounting of multi-port valves with more valve ports and the pump 80 in the integrated device 100.

As shown in FIGS. 10 to 14, the second flow passage 14 includes the first side flow passage 600, which further includes the first branch flow passage 61, a second branch flow passage 62, and a fifth branch flow passage 63. One end of the first branch flow passage 61 is in communication with the first sub-flow passage 11, and the other end of the first branch flow passage 61 is in communication with the first valve port 31. One end of the second branch flow passage 62 is in communication with the second sub-flow passage 12, and the other end of the second branch flow passage 62 is in communication with the second valve port 32. One end of the fifth branch flow passage 63 is in communication with the fifth valve port 33, and the other end of the fifth branch flow passage 63 is in communication with a port of a third fluid connector 24. In this embodiment, the three valve ports of the first multi-port valve 30 are arranged linearly, and the two valve ports on two sides may be arranged directly facing the first sub-flow passage 11 and the second sub-flow passage 12 at the bottom of the housing 51. Therefore, in this embodiment, the first branch flow passage 61 and the second branch flow passage 62 may be designed as straight through-hole flow passages, facilitating the connection between the valve ports and the first flow passage 13. At least part of walls defining the fifth branch flow passage 63 overlap with the walls defining the liquid storage cavity 53 in their projections onto the first plane L along the second direction S. In other words, along the first direction G, at least part of the walls defining the fifth branch flow passage 63 overlap with the walls defining the liquid storage cavity 53. In other words, at least part of the fifth branch flow passage 63 extends along a peripheral side portion of the wall of the housing 51. In this embodiment, the fifth branch flow passage 63 further extends to another peripheral side portion of the wall of the housing 51, and the fifth branch flow passage 63 is in communication with the third fluid connector 24 located on this another peripheral side portion. With this arrangement, an opening of the fifth branch flow passage 63 may be guided to a side adjacent to the side of the housing 51 where the first multi-port valve 30 is mounted, making the arrangement of the connectors of the integrated device 100 more flexible.

The second flow passage 14 of the integrated device 100 includes a second side flow passage 700, which includes the third branch flow passage 71 and a fourth branch flow passage 72. One end of the third branch flow passage 71 is in communication with the first sub-flow passage 11, and the other end of the third branch flow passage 71 is in communication with the third valve port 41. The fourth branch flow passage 72 is in communication with the second sub-flow passage 12 and the fourth valve port 42. The second side flow passage 700 further includes the sixth branch flow passage 76, a seventh branch flow passage 77, an eighth branch flow passage 78, the ninth branch flow passage 79, a tenth branch flow passage 73, an eleventh branch flow passage 74, and a twelfth branch flow passage 75, which correspond one-to-one to the other seven valve ports of the second multi-port valve 40. At least part of walls defining the second side flow passage 700 overlap with the walls defining the liquid storage cavity 53 in their projections onto the first plane L along the second direction S. In other words, along the first direction G, at least part of the walls defining the second side flow passage 700 overlap with the walls defining the liquid storage cavity 53. Specifically, at least part of walls defining the seventh branch flow passage 77, the eighth branch flow passage 78, and the ninth branch flow passage 79 overlap with the walls defining the liquid storage cavity 53 in their projections onto the first plane L along the second direction S. In other words, the seventh branch flow passage 77, the eighth branch flow passage 78, and part of the ninth branch flow passage 79 extend along a peripheral side portion defining the liquid storage cavity 53 of the wall of the housing 51. At least part of the walls defining the second side flow passage 700 overlap with the pump mounting base 18 in their projections onto the first plane L along the second direction S. In other words, along the first direction G, at least part of the walls defining the second side flow passage 700 overlap with the pump mounting base 18. Specifically, at least part of walls defining the third branch flow passage 71, the fourth branch flow passage 72, the eleventh branch flow passage 74, and the sixth branch flow passage 76 overlap with the pump mounting base 18 in their projections onto the first plane L. The second side flow passage 700 makes full use of the space on the peripheral side of the liquid storage cavity 53 and the pump mounting base 18 for arrangement, facilitating the compact structure of the integrated device 100.

The fluid connector 20 includes a fourth fluid connector 25, a fifth fluid connector 26, a sixth fluid connector 27, and a seventh fluid connector 28. The sixth branch flow passage 76 and the ninth branch flow passage 79 are respectively in communication with the corresponding flow passages of the first flow passage 13. The seventh branch flow passage 77 is in communication with a port of the fourth fluid connector 25, and the eighth branch flow passage 78 is in communication with a port of the fifth fluid connector 26. One end of the tenth branch flow passage 73 is in communication with the corresponding valve port of the second multi-port valve 40, and the other end of the tenth branch flow passage 73 is in communication with the third sub-flow passage 130 corresponding to the second pump 82. One end of the eleventh branch flow passage 74 is in communication with the third sub-flow passage 130 corresponding to the third pump 83, and the eleventh branch flow passage 74 is also in communication with a port of the sixth fluid connector 27. The twelfth branch flow passage 75 is in communication with a port of the seventh fluid connector 28. The fourth fluid connector 25, the fifth fluid connector 26, and the second multi-port valve 40 are located on the same side. Along the first direction G, openings of the sixth fluid connector 27 and the seventh fluid connector 28 face away from the opening of the liquid storage cavity 53.

The provision of the second adapter plate 70 enables at least part of the valve ports of the second multi-port valve 40, which are circumferentially arranged, to be in communication with multiple flow passages extending along the same plane at the bottom of the housing 51, and enables the other valve ports of the second multi-port valve 40 to extend through the second side flow passage 700 to their respective fluid connectors 20. The provision of the second adapter plate 70 facilitates the mounting of the second multi-port valve 40 with multiple valve ports.

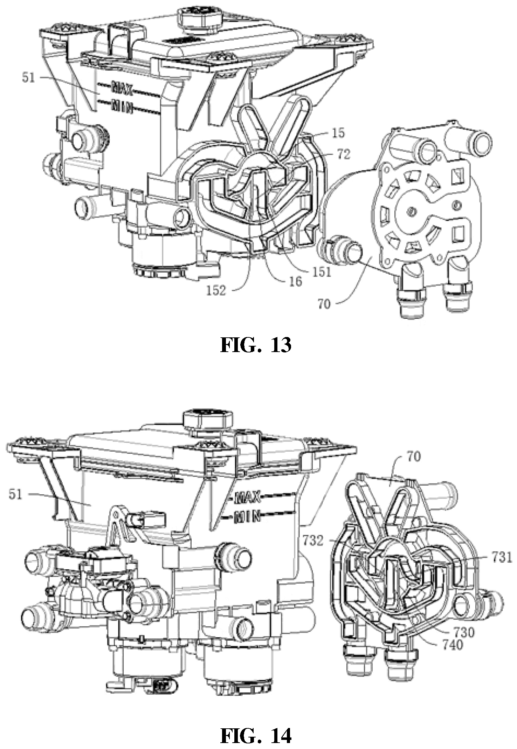

In this embodiment, as shown in FIGS. 14 to 15, the shape of the first adapter plate 60 is not strictly limited. For example, the first adapter plate 60 is generally plate-shaped. The first adapter plate 60 is sealingly connected to the housing 51 by screws or welding, or the like. At least part of the first side flow passage 600 is defined by the wall of the housing 51 and a wall of the first adapter plate 60, or in other words, at least part of the fifth branch flow passage 63 is defined by the wall of the housing 51 and the wall of the first adapter plate 60. In this embodiment, the shape of the second adapter plate 70 is not strictly limited. For example, the second adapter plate 70 is generally plate-shaped. The second adapter plate 70 is sealingly connected to the housing 51 by screws or welding, or the like. At least part of the second side flow passage 700 is defined by another part of the wall of the housing 51 and a wall of the second adapter plate 70.

Specifically, taking the fourth branch flow passage 72 as an example, the specific structure of the housing 51 and the adapter plate being engaged to form at least part of the second flow passage 14 is introduced as follows. Both the housing 51 and the adapter plate include flow passage grooves. The second adapter plate 70 includes a first protrusion 730 and has a first groove 740, and the housing 51 includes a second protrusion 15 and has a second groove 16. The first protrusion 730 is sealingly welded to the second protrusion 15, and the first groove 740 is in communication with the second groove 16. At least part of the third branch flow passage 71 is defined by a wall of the first groove 740 and a wall of the second groove 16, and at least part of the fourth branch flow passage 72 is defined by another part of the wall of the first groove 740 and another part of the wall of the second groove 16. The first protrusion 730 includes a first unit protrusion 731 and a second unit protrusion 732, and part of a side wall of the first unit protrusion 731 and part of a side wall of the second unit protrusion 732 form at least part of the wall of the first groove 740. The second protrusion 15 includes a third unit protrusion 151 and a fourth unit protrusion 152, and part of a side wall of the third unit protrusion 151 and part of a side wall of the fourth unit protrusion 152 form at least part of the wall of the second groove 16.

In other embodiments, at least one of the housing 51 and the adapter plate includes a flow passage groove, and at least part of the second flow passage 14 is defined by a wall of the flow passage groove. For example, the flow passage groove of the housing 51 is connected to a plate-shaped adapter plate through welding, which may also form at least part of the second flow passage 14. In this embodiment, the flow passage grooves include the first groove 740 and the second groove 16, and at least part of the second flow passage 14 is defined by the wall of the first groove 740 and the wall of the second groove 16, which facilitates machining of both the housing 51 and the adapter plate.

The first flow passage 13 located at the bottom of the housing 51 may be formed by integral injection molding of the housing 51, and the second flow passage 14 located on the peripheral side of the housing 51 is formed by welding the housing 51 with the first adapter plate 60 or the second adapter plate 70. Compared with the conventional structure where the multi-layer flow passages are located at the bottom of the housing 51, the integrated device 100 in this embodiment has a simple structure and a simple manufacturing process.

The technical features in the above embodiments may be combined in any manner. For ease of description, not all possible combinations of these technical features in the above embodiments have been described. However, as long as such combinations of technical features do not result in contradictions, they should be considered to be within the scope of this specification. When technical features from different embodiments are presented in the same drawing, it may be deemed that the drawing also simultaneously discloses combined examples of the respective embodiments involved.

The foregoing embodiments only illustrate several implementations of the present application and the descriptions thereof are specific and detailed, but shall not be construed as limiting the scope of the present application. It should be noted that variations and improvements can be made by those skilled in the art without departing from the concept of the present application, all of which fall within the protection scope of the present application.

## Claims

1. An integrated device, comprising a housing (51), a cover (52), and adapter plates (60, 70), wherein
the integrated device has a liquid storage cavity (53), which is defined by a wall of the housing (51) and a wall of the cover (52);
the integrated device has a flow passage (10), which comprises a first flow passage (13) and a second flow passage (14); and
a first direction (G) is defined as a direction in which the housing (51) is connected with the cover (52), wherein along the first direction (G), the first flow passage (13) is located on a side of the housing (51) away from the cover (52), and along the first direction (G), walls defining at least part of the second flow passage (14) overlap with the walls defining the liquid storage cavity (53).

2. The integrated device according to claim 1, wherein the housing (51) has the first flow passage (13), the first flow passage (13) is defined by the wall of the housing (51), and the housing (51) is integrally injection-molded; and
the adapter plates (60, 70) is arranged separately from the housing (51) and is in fixed or position-limited connection with the housing (51), at least one of the housing (51) and the adapter plates (60, 70) comprise a flow passage groove (16, 740), and at least part of the second flow passage (14) is defined by a wall of the flow passage groove (16, 740).

3. The integrated device according to claim 2, wherein the adapter plates (60, 70) comprises a first groove (740), the housing (51) comprise a second groove (16), and at least part of the second flow passage (14) is defined by a wall of the first groove (740) and a wall of the second groove (16).

4. The integrated device according to claim 2 or 3, wherein the adapter plates (60, 70) comprise a first adapter plate (60) and a second adapter plate (70), the second flow passage (14) comprises a first side flow passage (600) and a second side flow passage (700), at least part of the first side flow passage (600) is defined by the wall of the housing (51) and a wall of the first adapter plate (60), and at least part of the second side flow passage (700) is defined by another part of the wall of the housing (51) and a wall of the second adapter plate (70).

5. The integrated device according to claim 4, comprising a first multi-port valve (30) and a second multi-port valve (40), wherein the first flow passage (13) comprises a first sub-flow passage (11), which is a straight passage, one end of the first sub-flow passage (11) is in communication with at least one valve port of the first multi-port valve (30), and the other end of the first sub-flow passage (11) is in communication with at least one valve port of the second multi-port valve (40).

6. The integrated device according to claim 5, wherein the first flow passage (13) comprise a second sub-flow passage (12), at least part of the first sub-flow passage (11) is substantially parallel to at least part of the second sub-flow passage (12), one end of the second sub-flow passage (12) is in communication with another valve port of the first multi-port valve (30), and the other end of the second sub-flow passage (12) is in communication with another valve port of the second multi-port valve (40).

7. The integrated device according to claim 6, wherein the first sub-flow passage (11) is adjacent to the second sub-flow passage (12), the housing (51) comprises a communication component (X), at least part of the first sub-flow passage (11) is located on one side of the communication component (X), at least part of the second sub-flow passage (12) is located on an opposite side of the communication component (X), and the communication component (X) is configured for unidirectional communication between the second sub-flow passage (12) and the first sub-flow passage (11).

8. The integrated device according to any one of claims 4 to 7, comprising a second multi-port valve (40), wherein the first flow passage (13) comprise a third sub-flow passage (130), at least part of the third sub-flow passage (130) is a straight passage, one end of the third sub-flow passage (130) is in communication with at least one valve port of the second multi-port valve (40), and the other end of the third sub-flow passage (130) is in communication with the liquid storage cavity (53).

9. The integrated device according to any one of claims 4 to 7, comprising a first multi-port valve (30) and a second multi-port valve (40), wherein at least part of the first multi-port valve (30) is located on one side of the housing (51), and at least part of the second multi-port valve (40) is located on an opposite side of the housing (51);
the first flow passage (13) comprises a fourth sub-flow passage (134), and at least part of the fourth sub-flow passage (134) is a straight passage; and
the integrated device comprises a first fluid connector (21), wherein both the first fluid connector (21) and the first multi-port valve (30) are located on one side of the housing (51), one end of the fourth sub-flow passage (134) is in communication with at least one valve port of the second multi-port valve (40), and the other end of the fourth sub-flow passage (134) is in communication with a port of the first fluid connector (21).

10. The integrated device according to any one of claims 5 to 9, comprising a pump (80), wherein
the housing (51) comprises a pump mounting base (18), at least part of the pump (80) is located in a chamber of the pump mounting base (18), and the pump (80) is in fixed or position-limited connection with the pump mounting base (18);
the first flow passage (13) comprise a first sub-flow passage (11) and a fifth sub-flow passage (135); and
along the first direction (G), the pump mounting base (18) is located farther from the cover (52) than the first sub-flow passage (11), the fifth sub-flow passage (135) is in communication with the chamber of the pump mounting base (18), and along the first direction (G), the fifth sub-flow passage (135) and the first sub-flow passage (11) are positioned at different heights.
